# EUROPÄISCHE PATENTSCHRIFT

(11) **EP 2 449 436 B1**
(45) Veröffentlichungstag und Bekanntmachung des Hinweises auf die Patenterteilung: **24.04.2013**
(21) Anmeldenummer: 10728223.8
(22) Anmeldetag: 30.06.2010
(51) Int. Cl.: G05B 11/42, G05B 13/04

(54) **LASTKRAFTREGELUNG EINER HYDRAULIKZYLINDEREINHEIT MIT LASTBEOBACHTER**
LOAD FORCE CONTROL FOR A HYDRAULIC CYLINDER UNIT WITH LOAD OBSERVER
RÉGLAGE DE LA FORCE DE CHARGE D'UNE UNITÉ DE CYLINDRE HYDRAULIQUE DOTÉE D'UN OBSERVATEUR DE CHARGE

(30) Priorität: 03.07.2009 EP 09164521
(43) Veröffentlichungstag der Anmeldung: 09.05.2012
(73) Patentinhaber: Siemens Aktiengesellschaft, 80333 München (DE)
(72) Erfinder: TAUTZ, Wilfried, 91301 Forchheim (DE); WOHLD, Dietrich, 91462 Rauschenberg (DE)
(86) Internationale Anmeldenummer: PCT/EP2010/059255
(87) Internationale Veröffentlichungsnummer: WO 2011/000856

(56) Entgegenhaltungen:
- DE-A1- 4 243 045

## Beschreibung

Die vorliegende Erfindung betrifft eine Regeleinrichtung zum Regeln einer von einer Hydraulikzylindereinheit über ein mechanisches System auf eine Last ausgeübten Istlastkraft, wobei die Regeleinrichtung einen Kraftregler umfasst, dem eine von der Hydraulikzylindereinheit auf die Last auszuübende Solllastkraft, eine von der Hydraulikzylindereinheit auf das mechanische System ausgeübte Kolbenkraft und eine durch das mechanische System bewirkte Eigenkraft zugeführt werden, wobei das Ausgangssignal des Kraftreglers auf eine Ventilsteuereinheit wirkt, mittels derer die Hydraulikzylindereinheit verstellt wird.

Hydraulikzylindereinheiten werden verwendet, um unter Last mechanische Bewegungen vorzunehmen. Sie werden in der Regel kraft- oder positionsgeregelt betrieben. Sowohl im kraftgeregelten Betrieb als auch im positionsgeregelten Betrieb werden möglichst kurze Anregelzeigen angestrebt, um Sollwertänderungen schnell folgen zu können und Störungen schnell ausregeln zu können.

Die Hydraulikzylindereinheit wirkt über ein mechanisches System auf die Last. Das mechanische System umfasst zumindest den Kolben der Hydraulikzylindereinheit, gegebenenfalls auch weitere Einheiten, die zwischen dem Kolben der Hydraulikzylindereinheit und der Last angeordnet sind. Das mechanische System bewirkt eine Eigenkraft, die es auf die Hydraulikzylindereinheit ausübt. Die Kolbenkraft ergibt sich aus den wirksamen Kolbenflächen und den wirksamen Drücken der Hydraulikzylindereinheit. Im statischen Zustand der Hydraulikzylindereinheit unterscheiden sich die Kolbenkraft und die auf die Last wirkende Istlastkraft um die Eigenkraft. Im dynamischen Zustand, also während die Hydraulikzylindereinheit verstellt wird, ist diese Beziehung auf Grund von zusätzlich wirkenden Beschleunigungs- und Reibungskräften jedoch nicht mehr erfüllt.

In technologischer Hinsicht ist die auf das mechanische System ausgeübte Kolbenkraft irrelevant. Tatsächlich geregelt werden soll die Lastkraft, also die über das mechanische System auf die Last ausgeübte Kraft. In manchen Fällen ist es jedoch nicht möglich, den Istwert der Lastkraft zu messen. In derartigen Fällen wird im Stand der Technik die Kolbenkraft geregelt. Diese Vorgehensweise führt bei "harten", relativ unnachgiebigen Lasten zu guten Regelergebnissen. Bei "weichen", nachgiebigen Lasten hingegen ergibt sich eine relativ schlechte Regeldynamik. DE 4 243 045 beschreibt ein System zum Regeln von einer Hydraulikzylindereinheit.

Die Aufgabe der vorliegenden Erfindung besteht darin, Möglichkeiten zu schaffen, mittels derer eine hohe Regeldynamik erreicht werden kann, obwohl die Lastkraft selbst nicht gemessen wird.

Die Aufgabe wird durch Regeleinrichtung zum Regeln einer von einer Hydraulikzylindereinheit über ein mechanisches System auf eine Last ausgeübten Lastkraft mit den Merkmalen des Anspruchs 1 gelöst. Vorteilhafte Ausgestaltungen der erfindungsgemäßen Regeleinrichtung sind Gegenstand der abhängigen Ansprüche 2 bis 7.

Bei der erfindungsgemäßen Regeleinrichtung ist vorgesehen,
- dass die Regeleinrichtung einen Lastkraftregler, einen Kraftregler, einen Lastbeobachter und ein Verzögerungsglied umfasst,
- dass dem Lastkraftregler eine von der Hydraulikzylindereinheit auf die Last auszuübende Solllastkraft und eine vom Lastbeobachter ermittelte erwartete Istlastkraft zugeführt werden,
- dass dem Kraftregler die Solllastkraft, eine von der Hydraulikzylindereinheit auf das mechanische System ausgeübte Kolbenkraft und eine durch das mechanische System bewirkte Eigenkraft zugeführt werden,
- dass die Ausgangssignale des Lastkraftreglers und des Kraftreglers zu einem unverzögerten Summensignal summiert werden und das unverzögerte Summensignal auf eine Ventilsteuereinheit wirkt, mittels derer die Hydraulikzylindereinheit verstellt wird,
- dass dem Lastbeobachter die Kolbenkraft, die Eigenkraft und ein verzögertes Summensignal zugeführt werden und
- dass das verzögerte Summensignal mittels des Verzögerungsgliedes durch Verzögern des unverzögerten Summensignals erzeugt wird.

Wenn die Hydraulikzylindereinheit in einem relativ engen Verfahrbereich bewegt wird, ist die obenstehende Ausgestaltung völlig ausreichend. Wenn die Hydraulikzylindereinheit über einen großen Verfahrbereich bewegt wird, kann die Regeldynamik dadurch erheblich verbessert werden, dass die Regeleinrichtung eine Linearisierungseinheit aufweist, mittels derer das unverzögerte Summensignal vor dem Zuführen zur Ventilsteuereinheit linearisiert wird. Denn auf Grund der Linearisierungseinheit kann erreicht werden, dass die Dynamik der Hydraulikzylindereinheit unabhängig von der Arbeitsstellung der Hydraulikzylindereinheit stets in einem optimalen Bereich gehalten wird.

In manchen Fällen kann es ausreichen, die Linearisierungseinheit derart auszugestalten, dass sie eine sogenannte Schmetterlingskurve realisiert. Bevorzugt ist jedoch, die Linearisierungseinheit derart auszugestalten, wie es aus der DE 10 2007 051 857 B3 bekannt ist.

Das Verzögerungsglied dient dazu, die Dynamik der Ventilsteuereinheit nachzubilden. In der Regel ist das Verzögerungsglied zu diesem Zweck als PT2-Glied (oder höher) ausgebildet.

Die Ventilsteuereinheit bewirkt im Zusammenwirken mit der Hydraulikzylindereinheit ein Integralverhalten der Regelung. Sowohl bezüglich des Lastkraftreglers als auch bezüglich des Kraftreglers ist es daher ausreichend, sie als P-Regler (= Proportionalregler) auszubilden. Falls erforderlich, kann der Lastkraftregler jedoch alternativ als PI-Regler (Proportional-Integral-Regler) ausgebildet sein, der Kraftregler als PD-Regler (Proportional-Differenzial-Regler).

Die Istlastkraft ist eine translatorische Größe. Gleiches gilt für die Solllastkraft, die erwartete Istlastkraft, die Kolbenkraft und die Eigenkraft. Die vorliegende Erfindung ist jedoch ebenso bei rotatorischen Systemen einsetzbar. In diesem Fall treten an die Stelle der genannten Kräfte die entsprechenden Momente. Verfahrwege (und deren zeitliche Ableitungen) sind in diesem Fall durch Winkel (und deren zeitliche Ableitungen) zu ersetzen.

Es ist möglich, die erfindungsgemäße Regeleinrichtung schaltungstechnisch zu realisieren. Üblicherweise ist die Regeleinrichtung jedoch als softwareprogrammierbare Regeleinrichtung ausgebildet, die mit einem Softwaremodul programmiert ist. Das Softwaremodul umfasst von der Regeleinrichtung unmittelbar abarbeitbaren Maschinencode. Durch das Abarbeiten des Maschinencodes wird die Ausbildung der Regeleinrichtung als erfindungsgmäße Regeleinrichtung bewirkt. Die vorliegende Erfindung betrifft daher weiterhin ein Softwaremodul, das Maschinencode umfasst, der von einer an eine Hydraulikzylindereinheit angebundenen softwareprogrammierbaren Regeleinrichtung unmittelbar abarbeitbar ist und dessen Abarbeitung durch die Regeleinrichtung bewirkt, dass die Regeleinrichtung als erfindungsgemäße Regeleinrichtung ausgebildet wird.

Der Einsatz der erfindungsgemäßen Regeleinrichtung ist stets dann sinnvoll, wenn mittels der Hydraulikzylindereinheit eine weiche, nachgiebige Last verstellt werden soll. Ein Beispiel einer derartigen Last ist die Belastung eines Schlingenhebers eines Walzwerks. Die vorliegende Erfindung betrifft daher weiterhin die Verwendung einer mittels einer erfindungsgemäßen Regeleinrichtung geregelten Hydraulikzylindereinheit zur Kraftregelung eines Schlingenhebers eines Walzwerks.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: eine Hydraulikzylindereinheit mit Last,
- FIG 2: eine erfindungsgemäße Regeleinrichtung,
- FIG 3: einen Lastbeobachter und
- FIG 4: eine Ausgestaltung der Regeleinrichtung von FIG 2.

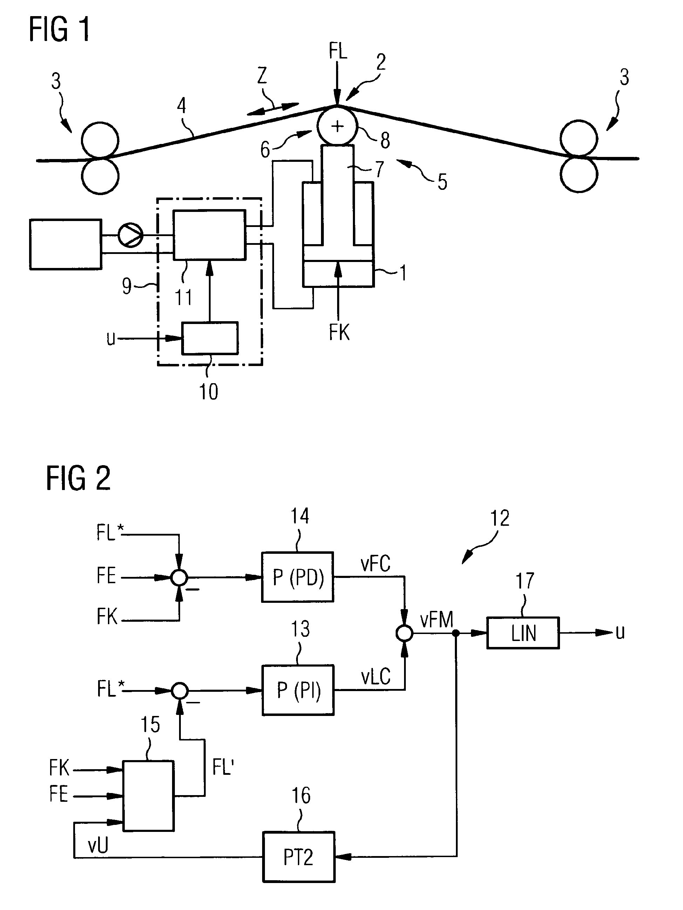

Gemäß FIG 1 soll mittels einer Hydraulikzylindereinheit 1 eine Last 2 entsprechend technologischen Erfordernissen eingestellt werden. Gemäß FIG 1 wird die Last 2 durch eine Zugspannung Z bewirkt, die ein zwischen zwei Walzgerüsten 3 eingespanntes Band 4 auf einen Schlingenheber 5 des Walzwerks ausübt. Das Band 4 ist in der Regel ein Metallband, beispielsweise ein Stahl- oder Aluminiumband. Das Walzwerk ist in der Regel ein Warmwalzwerk.

Die obenstehend in Verbindung mit FIG 1 erläuterte Anwendung ist derzeit bevorzugt. Die Erfindung ist jedoch nicht auf diese Anwendung beschränkt. Sie ist vielmehr universell einsetzbar.

Die Hydraulikzylindereinheit 1 wirkt über ein mechanisches System 6 auf die Last 2. Das mechanische System 6 umfasst zumindest den Kolben 7 der Hydraulikzylindereinheit 1. Bei der - rein beispielhaften - Anwendung von FIG 1 umfasst das mechanische System 6 zusätzlich eine Rolle 8, die mittels der Hydraulikzylindereinheit 1 an das Band 4 angestellt wird.

Die Hydraulikzylindereinheit 1 wird mittels einer Ventilsteuereinheit 9 verstellt. Die Ventilsteuereinheit 9 umfasst in der Regel einen Servoventilantrieb 10 und ein Servoventil 11. Das Servoventil 11 kann alternativ als Zweiwegeventil oder als Vierwegeventil ausgebildet sein. Beide Ausgestaltungen sind Fachleuten allgemein bekannt und geläufig. Der Ventilsteuereinheit 9 wird ein Steuersignal u zugeführt, das von einer Regeleinrichtung 12 (siehe FIG 2) ermittelt wird. Mittels der Regeleinrichtung 12 wird eine Istlastkraft FL geregelt, welche die Hydraulikzylindereinheit 1 über das mechanische System 6 auf die Last 2 ausübt. Der Aufbau und die Wirkungsweise der Regeleinrichtung 12 sind der Gegenstand der vorliegenden Erfindung. Sie werden nachfolgend in Verbindung mit FIG 2 erläutert.

Gemäß FIG 2 umfasst die Regeleinrichtung 12 einen Lastkraftregler 13, einen Kraftregler 14, einen Lastbeobachter 15 und ein Verzögerungsglied 16.

Dem Lastkraftregler 13 werden eine Solllastkraft FL* und eine erwartete Istlastkraft FL' zugeführt. Die Solllastkraft FL* ist die Kraft, die von der Hydraulikzylindereinheit 1 auf die Last 2 ausgeübt werden soll. Die erwartete Istlastkraft FL' wird vom Lastbeobachter 15 ermittelt.

Der Lastkraftregler 13 regelt die Lastkraft FL. Der Lastkraftregler 13 ermittelt zu diesem Zweck anhand der Differenz von Solllastkraft FL* und erwarteter Istlastkraft FL' ein Ausgangssignal vLC, nachfolgend Lastausgangssignal genannt. Der Lastkraftregler 13 ist üblicherweise entweder als P-Regler oder als PI-Regler ausgebildet.

Dem Kraftregler 14 werden die Solllastkraft FL*, eine Kolbenkraft FK und eine Eigenkraft FE zugeführt. Die Kolbenkraft FK ist diejenige Kraft, die von der Hydraulikzylindereinheit 1 auf das mechanische System 6 ausgeübt wird. Sie ergibt sich in allgemein bekannter Weise durch die wirksamen Kolbenflächen des Kolbens 7 und die auf die wirksamen Flächen wirkenden Drücke. Die Eigenkraft FE berücksichtigt insbesondere die Gewichtskraft, welche das mechanische System 6 - gemäß Ausführungsbeispiel also der Kolben 7 und die Rolle 8 - ausüben.

Der Kraftregler 14 regelt die Kolbenkraft FK. Der Kraftregler 14 ermittelt zu diesem Zweck die Summe von Solllastkraft FL* und Eigenkraft FE, wobei von dieser Summe die Kolbenkraft FK subtrahiert wird. Der Kraftregler 14 ermittelt ein Ausgangssignal vFC, nachfolgend Kraftausgangssignal genannt. Der Kraftregler 14 ist üblicherweise als P-Regler oder als PD-Regler ausgebildet. Der Kraftregler 14 stabilisiert die Regelung und ermöglicht eine höhere Dynamik.

Die Ausgangssignale vLC, vFC des Lastkraftreglers 13 und des Kraftreglers 14 werden zu einem unverzögerten Summensignal vFM summiert. Das unverzögerte Summensignal vFM wirkt auf die Ventilsteuereinheit 9.

Es ist möglich, das unverzögerte Summensignal vFM der Ventilsteuereinheit 9 direkt zuzuführen. In diesem Fall ist das Steuersignal u mit dem unverzögerten Summensignal vFM identisch. In vielen Fällen jedoch wird das unverzögerte Summensignal vFM einer Linearisierungseinheit 17 zugeführt, die das unverzögerte Summensignal vFM linearisiert. In diesem Fall entspricht das Steuersignal u dem von der Linearisierungseinheit 17 ermittelten Signal.

Die Linearisierungseinheit 17 kann nach Bedarf ausgebildet sein. Derzeit ist bevorzugt, die Linearisierungseinheit 17 so auszubilden, wie es in der DE 10 2007 051 857 B3 ausführlich beschrieben ist.

Die Linearisierungseinheit 17 ist der Ventilsteuereinheit 9 unmittelbar vorgeordnet. Sie kompensiert Nichtlinearitäten des Hydrauliksystems.

Damit der Lastbeobachter 15 die erwartete Istlastkraft FL' ermitteln kann, werden dem Lastbeobachter 15 die Kolbenkraft FK, die Eigenkraft FE und ein verzögertes Summensignal vU zugeführt. Das verzögerte Summensignal vU wird mittels des Verzögerungsgliedes 16 durch Verzögern des unverzögerten Summensignals vFM ermittelt.

Das Verzögerungsglied 16 bildet die Dynamik der Ventilsteuereinheit 9 nach. Dadurch wird erreicht, dass das verzögerte Summensignal vU mit der Kolbenkraft FK synchronisiert ist. Das Verzögerungsglied 16 kann nach Bedarf ausgebildet sein, sofern es die soeben erläuterte Funktionalität bewirkt. In der Regel ist das Verzögerungsglied 16 als PT2-Glied ausgebildet.

Der Lastbeobachter 15 kann ebenfalls nach Bedarf ausgebildet sein. Entscheidend ist, dass er die Istlastkraft FL nachbildet. Der Lastbeobachter 15 wirkt somit als entsprechender Softsensor, der anhand (mindestens) einer gemessenen Größe (nämlich der Kolbenkraft FK) die nicht gemessene Istlastkraft FL nachbildet.

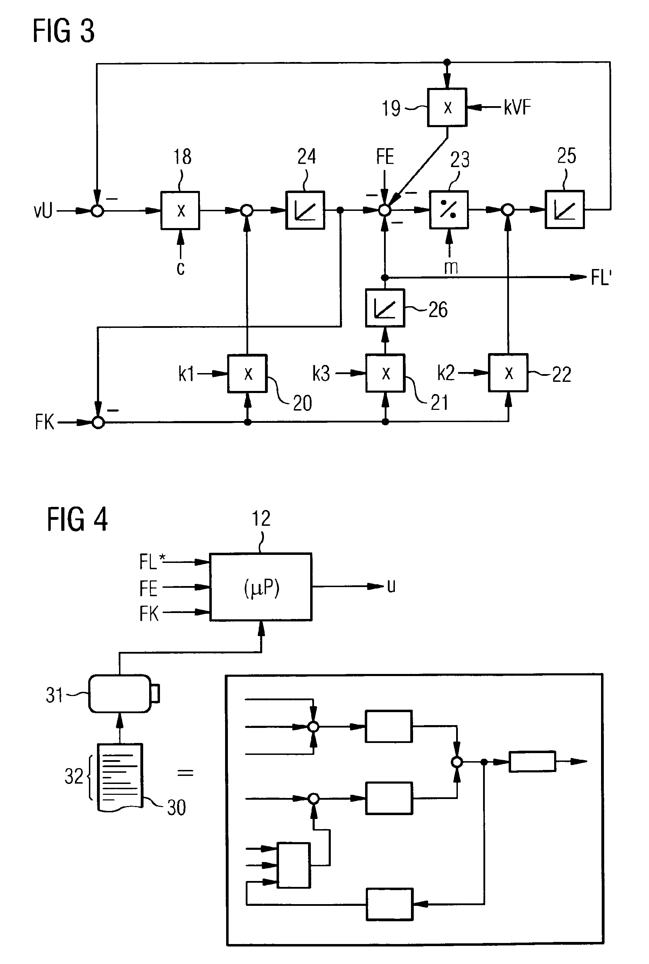

Der Aufbau und die Wirkungsweise des Lastbeobachters 15 sind Fachleuten allgemein bekannt. Zu seiner Implementierung gibt es mehrere Möglichkeiten, die Fachleuten ebenfalls bekannt sind. Eine mögliche Ausgestaltung des Lastbeobachters 15 wird nachfolgend in Verbindung mit FIG 3 erläutert.

Gemäß FIG 3 umfasst der Lastbeobachter 15 die in FIG 3 dargestellte Struktur. Die Elemente 18 bis 22 sind Multiplizierer. Das Element 23 ist ein Dividierer. Die Elemente 24 bis 26 sind Integratoren.

Der Parameter c entspricht der Federkonstanten der verwendeten Hydraulikflüssigkeit im Arbeitspunkt der Hydraulikzylindereinheit 1. Der Parameter c kann eine Konstante sein oder vom Arbeitspunkt der Hydraulikzylindereinheit 1 abhängen. Wenn die Linearisierungseinheit 17 vorhanden ist, kann beispielsweise die Linearisierungseinheit 17 den Parameter c ermitteln und ihn dem Lastbeobachter 15 zur Verfügung stellen. Der Parameter c kann jedoch ebenso anderweitig ermittelt werden.

kVF und m sind Parameter, die vorzugsweise bei der Inbetriebnahme der Regeleinrichtung 12 einmalig eingestellt und danach beibehalten werden. Alternativ können sie im laufenden Betrieb variiert werden.

k1 bis k3 sind Parameter, mittels derer das Einschwingverhalten des Lastbeobachters 15 eingestellt wird.

Die Regeleinrichtung 12 ist entsprechend FIG 4 vorzugsweise als softwareprogrammierbare Regeleinrichtung 12 ausgebildet. Die Regeleinrichtung 12 ist daher mittels eines Softwaremoduls 30 programmiert. Das Softwaremodul 30 kann der Regeleinrichtung 12 beispielsweise mittels eines Datenträgers 31 zugeführt werden, auf dem das Softwaremodul 30 in (ausschließlich) maschinenlesbarer Form gespeichert ist. Als Datenträger 31 kommt prinzipiell ein beliebiger Datenträger in Frage. Dargestellt ist - rein beispielhaft - in FIG 4 ein USB-Memorystick.

Das Softwaremodul 30 umfasst Maschinencode 32. Der Maschinencode 32 ist von der Regeleinrichtung 12 unmittelbar abarbeitbar. Das Abarbeiten des Maschinencodes 32 durch die Regeleinrichtung 12 bewirkt, dass die Regeleinrichtung 12 die Hydraulikzylindereinheit 1 so regelt, wie dies vorstehend erläutert wurde. Die Programmierung der Regeleinrichtung 12 mit dem Softwaremodul 30 bzw. die Abarbeitung des Maschinencodes 32 durch die Regeleinrichtung 12 bewirkt also die entsprechende Ausbildung der Regeleinrichtung 12.

Die Erfindung wurde vorstehend in Verbindung mit einer Regeleinrichtung 12 erläutert, bei welcher die Istlastkraft FL, die Solllastkraft FL*, die erwartete Istlastkraft FL', die Kolbenkraft FK und die Eigenkraft FE ausgewertet werden. Die genannten Kräfte FL, FL*, FL', FK und FE könnten jedoch durch korrespondierende rotatorische Größen ersetzt sein. Ein Beispiel eines derartigen Falles ist ein sogenannter Dreh-Looper, wie er in Walzwerken verwendet wird.

Die vorliegende Erfindung weist viele Vorteile auf. Insbesondere kann eine hohe Dynamik erreicht werden, obwohl die Istlastkraft FL nicht direkt gemessen wird. Bei Vorhandensein der Linearisierungseinheit 17 ergibt sich die hohe Dynamik sogar über den gesamten Verfahrbereich der Hydraulikzylindereinheit 1. Weiterhin ist die erfindungsgemäße Ausgestaltung der Regeleinrichtung 12 oftmals ohne großen Aufwand bei bestehenden Regeleinrichtungen nachrüstbar. Dies gilt besonders, wenn die Regeleinrichtung 12 als softwareprogrammierbare Regeleinrichtung 12 ausgebildet ist.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Regeleinrichtung zum Regeln einer von einer Hydraulikzylindereinheit (1) über ein mechanisches System (6) auf eine Last (2) ausgeübten Istlastkraft (FL), **dadurch gekennzeichnet dass**
- die Regeleinrichtung (12) einen Lastkraftregler (13), einen Kraftregler (14), einen Lastbeobachter (15) und ein Verzögerungsglied (16) umfasst,
- wobei dem Lastkraftregler (13) eine von der Hydraulikzylindereinheit (1) auf die Last (2) auszuübende Solllastkraft (FL*) und eine vom Lastbeobachter (15) ermittelte erwartete Istlastkraft (FL') zugeführt werden,
- wobei dem Kraftregler (14) die Solllastkraft (FL*), eine von der Hydraulikzylindereinheit (1) auf das mechanische System (6) ausgeübte Kolbenkraft (FK) und eine durch das mechanische System (6) bewirkte Eigenkraft (FE) zugeführt werden,
- wobei die Ausgangssignale des Lastkraftreglers (13) und des Kraftreglers (14) zu einem unverzögerten Summensignal (vFM) summiert werden und das unverzögerte Summensignal (vFM) auf eine Ventilsteuereinheit (9) wirkt, mittels derer die Hydraulikzylindereinheit (1) verstellt wird,
- wobei dem Lastbeobachter (15) die Kolbenkraft (FK), die Eigenkraft (FE) und ein verzögertes Summensignal (vU) zugeführt werden,
- wobei das verzögerte Summensignal (vU) mittels des Verzögerungsgliedes (16) durch Verzögern des unverzögerten Summensignals (vFM) erzeugt wird.

2. Regeleinrichtung nach Anspruch 1,
**dadurch gekennzeichnet, dass** sie eine Linearisierungseinheit (17) aufweist, mittels derer das unverzögerte Summensignal (vFM) vor dem Zuführen zur Ventilsteuereinheit (9) linearisiert wird.

3. Regeleinrichtung nach Anspruch 1 oder 2,
**dadurch gekennzeichnet, dass** das Verzögerungsglied (16) als PT2-Glied ausgebildet ist.

4. Regeleinrichtung nach Anspruch 1, 2 oder 3,
**dadurch gekennzeichnet, dass** der Lastkraftregler (13) als P-Regler oder als PI-Regler ausgebildet ist.

5. Regeleinrichtung nach einem der obigen Ansprüche,
**dadurch gekennzeichnet, dass** der Kraftregler (14) als P-Regler oder als FD-Regler ausgebildet ist.

6. Regeleinrichtung nach einem der obigen Ansprüche,
**dadurch gekennzeichnet, dass** die Istlastkraft (FL), die Solllastkraft (FL*), die erwartete Istlastkraft (FL'), die Kolbenkraft (FK) und die Eigenkraft (FE) durch entsprechende Momente ersetzt sind.

7. Regeleinrichtung nach einem der obigen Ansprüche,
**dadurch gekennzeichnet, dass** sie als softwareprogrammierbare Regeleinrichtung ausgebildet ist, die mit einem Softwaremodul (30) programmiert ist, dass das Softwaremodul (30) von der Regeleinrichtung unmittelbar abarbeitbaren Maschinencode (32) umfasst und dass die Ausbildung als Regeleinrichtung nach einem der obigen Ansprüche durch das Abarbeiten des Maschinencodes (32) bewirkt wird.

8. Softwaremodul, das Maschinencode (32) umfasst, der von einer an eine Hydraulikzylindereinheit (1) angebundenen softwareprogrammierbaren Regeleinrichtung (12) unmittelbar abarbeitbar ist und dessen Abarbeitung durch die Regeleinrichtung (12) bewirkt, dass die Regeleinrichtung als Regeleinrichtung (12) nach Anspruch 7 ausgebildet wird.

9. Verwendung einer mittels einer Regeleinrichtung (12) nach einem der Ansprüche 1 bis 7 geregelten Hydraulikzylindereinheit (1) zur Kraftregelung eines Schlingenhebers (5) eines Walzwerks.

## Claims

1. Control device for controlling an actual load force (FL) exerted by a hydraulic cylinder unit (1) by means of a mechanical system (6) on a load (2), **characterised in that**
- the control device (12) comprises a load force regulator (13), a force regulator (14), a load monitor (15) and a delay element (16),
- wherein a target load force (FL*) to be exerted on the load (2) by the hydraulic cylinder unit (1) and an expected actual load force (FL') determined by the load force monitor (15) are fed to the load force regulator (13),
- wherein the target load force (FL*), a piston force (FK) exerted on the mechanical system (6) by the hydraulic cylinder unit (1) and an internal force (FE) caused by the mechanical system (6) are fed to the force regulator (14),
- wherein the output signals of the load force regulator (13) and the force regulator (14) are summed to an undelayed sum signal (vFM) and the undelayed sum signal (vFM) acts on a valve control unit (9) by means of which the hydraulic cylinder unit (1) is adjusted,
- wherein the piston force (FK), the internal force (FE) and a delayed sum signal (vU) are fed to the load monitor (15),
- wherein the delayed sum signal (vU) is generated by means of the delay element (16) by delaying the undelayed sum signal (vFM).

2. Control device according to claim 1,
**characterized in that** it has a linearization unit (17), by means of which the undelayed sum signal (vFM) is linearised before being fed to the valve control unit (9).

3. Control device according to claim 1 or 2,
**characterized in that** the delay element (16) is embodied as a PT2 element.

4. Control device according to claim 1, 2 or 3,
**characterized in that** the load force regulator (13) is embodied as a P controller or as a PI controller.

5. Control device according to one of the preceding claims,
**characterized in that** the force regulator (14) is embodied as a P controller or as a PD controller.

6. Control device according to one of the above claims,
**characterized in that** the actual load force (FL), the target load force (FL*), the expected actual load force (FL'), the piston force (FK) and the internal force (FE) are replaced by corresponding moments.

7. Control device according to one of the above claims,
**characterized in that** it is embodied as a software-programmable control device which is programmed with a software module (30), that the software module (30) comprises machine code (32) able to be processed directly by the control device and that the embodiment as a control device is brought about in accordance with one of the above claims by the processing of the machine code (32).

8. Software module, comprising machine code (32) which is able to be processed directly by a software-programmable control device (12) linked to a hydraulic cylinder unit (1) and of which the processing by the control device (12) has the effect of embodying the control device as a control device (12) according to claim 7.

9. The use of a hydraulic cylinder unit (1) controlled by means of a control device (12) according to one of claims 1 to 7 for controlling the force of a looper (5) of a rolling mill.

## Revendications

1. Dispositif de réglage pour régler une force ( FL ) de charge réelle à appliquer par une unité ( 1 ) de cylindre hydraulique à une charge ( 2 ) par l'intermédiaire d'un système ( 6 ) mécanique,
**caractérisé en ce que**
- le dispositif ( 12 ) de réglage comprend un régleur ( 13 ) de force de charge, un régleur ( 14 ) de force, un observateur ( 15 ) de charge et un élément ( 16 ) de temporisation,
- dans lequel il est envoyé, au régleur ( 13 ) de force de charge, une force ( FL* ) de charge de consigne à appliquer par l'unité ( 1 ) de cylindre hydraulique à la charge ( 2 ) et une force ( FL' ) de charge réelle escomptée et déterminée par l'observateur ( 15 ) de charge,
- dans lequel il est envoyé, au régleur ( 14 ) de force, la force ( FL* ) de charge de consigne, une force ( FK ) de piston appliquée par l'unité ( 1 ) de cylindre hydraulique au système ( 6 ) mécanique et une force ( FE ) propre provoquée par le système ( 6 ) mécanique,
- dans lequel des signaux de sortie du régleur ( 13 ) de force de charge et du régleur ( 14 ) de force sont sommés en un signal ( vFM ) de somme non temporisé et le signal ( vFM ) de somme non temporisé agit sur une unité ( 9 ) de commande de vanne, au moyen de laquelle l'unité ( 1 ) de cylindre hydraulique est déplacée,
- dans lequel il est envoyé, à l'observateur ( 15 ) de charge, la force ( FK ) de piston, la force ( FE ) propre et un signal ( vU ) de somme temporisé,
- dans lequel le signal ( vU ) de somme temporisé est produit au moyen de l'élément ( 16 ) de temporisation par temporisation du signal ( vFM ) de somme non temporisé.

2. Dispositif de réglage suivant la revendication 1,
**caractérisé en ce qu'**il a une unité ( 17 ) de linéarisation, au moyen de laquelle le signal ( vFM ) de somme non temporisé est linéarisé avant l'envoi à l'unité ( 9 ) de commande de vanne.

3. Dispositif de réglage suivant la revendication 1 ou 2,
**caractérisé en ce que** l'élément ( 16 ) de temporisation est constitué en élément PT2.

4. Dispositif de réglage suivant la revendication 1, 2 ou 3,
**caractérisé en ce que** le régleur ( 13 ) de force de charge est constitué en régleur P ou en régleur PI.

5. Dispositif de réglage suivant l'une des revendications précédentes,
**caractérisé en ce que** le régleur ( 14 ) de force est constitué en régleur P ou en régleur PD.

6. Dispositif de réglage suivant l'une des revendications précédentes,
**caractérisé en ce que** la force ( FL ) de charge, la force ( FL* ) de charge de consigne, la force ( FL' ) de charge réelle escomptée, la force ( FK ) de piston et la force ( FE ) propre sont remplacées par des couples correspondants.

7. Dispositif de réglage suivant l'une des revendications précédentes,
**caractérisé en ce qu'**il est constitué en dispositif de réglage programmable par logiciel, qui est programmé par un module ( 30 ) de logiciel, **en ce que** le module ( 30 ) de logiciel comprend des codes ( 32 ) machine pouvant se dérouler directement dans le dispositif de réglage et **en ce que** la constitution sous la forme d'un dispositif de réglage est provoquée suivant l'une des revendications précédentes par le déroulement du code ( 32 ) machine.

8. Module de logiciel, qui comprend un code ( 32 ) machine, qui peut se dérouler directement dans un dispositif ( 12 ) de réglage programmable en logiciel et relié à une unité ( 1 ) de cylindre hydraulique et dont le déroulement par le dispositif ( 12 ) de réglage fait que le dispositif de réglage est constitué en dispositif ( 12 ) de réglage suivant la revendication 7.

9. Utilisation d'une unité ( 1 ) de cylindre hydraulique réglée par un dispositif ( 12 ) de réglage suivant l'une des revendications 1 à 7 pour le réglage de la force d'un releveur ( 5 ) de boucle d'un laminoir.
